# EUROPEAN PATENT SPECIFICATION

(11) **EP 0 451 347 B1**
(45) Date of publication and mention of the grant of the patent: **02.08.1995**
(21) Application number: 90123405.4
(22) Date of filing: 06.12.1990
(51) Int. Cl.: G05D 16/20

(54) **Bypass flow pressure regulator**
Druckregler für Bypassströmung
Régulateur de pression pour un écoulement dans un bypass

(30) Priority: 02.04.1990 US 502897
(43) Date of publication of application: 16.10.1991
(73) Proprietor: COLTEC INDUSTRIES INC, New York, N.Y. 10022 (US)
(72) Inventor: McCabe, Ralph Patrick, Troy, Michigan 48084 (US)
(74) Representative: Weitzel, Wolfgang, Dr.-Ing.

(56) References cited:
- FR-A- 2 145 278
- FR-A- 2 492 129
- US-A- 3 073 345
- US-A- 3 789 735
- US-A- 4 579 145

## Description

The invention relates to a pressure regulating assembly as per the preamble of claim 1.

A pressure regulating assembly of the said type is disclosed in US-A-4 579 145. This assembly comprises a housing which accomodates a magnetic coil and an armature, and a control slide actuated by the armature and movable within a valve through which pressure medium to be controlled passes. A plunger carrying the armature is arranged coaxially to the magnetic coil within the housing, and is supported at the both ends axially. A diaphragm spring is arranged at the end of the plunger facing toward to the control slide. A pin loaded with the control pressure and arranged at the end of the control slide acts on the control slide.

US-A-3 073 345 discloses a vacuum regulator comprising a casing with a solenoid armature and a coil attached thereto; the casing has a vacuum supply inlet and a modulated vacuum outlet defining three chambers. There is a spring loaded diaphragm which separates the first chamber from the third chamber and which carries a valve controlling the inlet and the outlet.

A problem with some of these pressure control devices is that they are not resistant to contamination, which compromises their reliability. Another problem is that such devices are single-stage devices wherein a spool valve is in direct contact with (and moved by) the armature, which requires that the position of the spool must be indexed to that of the armature, which complicates the device. Also, the travel of the spool is limited by what the armature can accommodate. Still further, only magnetic forces are available to move the spool.

A main object of the invention is to provide a pressure control device that overcomes problems, such as those referred to above, exhibited by prior art devices.

Accordingly, in a pressure regulator contemplated by the invention, the spool valve is not connected to the armature. Instead, the armature operates a first stage poppet servo valve.

Further, servo pressure is determined by the force balance on the armature, and the resulting servo pressure force has to equal the sum of the magnetic force and a mechanical spring force.

Additionally, there is also a force balance on the spool valve, and the spool will move, changing control pressure until the control pressure plus spool spring force equals the servo pressure force.

Some of the advantages of a pressure regulator embodying the invention are as follows:
1. Large hydraulic forces are available to move the spool valve instead of low magnetic forces, which substantially improves response time and overcomes potential fouling.
2. Since the position of the spool valve is independent of the position of the solenoid armature, large flows can be accommodated without pressure variation due to changes in armature position.
3. Manufacturability is improved because there is no need to maintain a precise position between the armature and the spool valve and its ports.
4. Hydraulic flow forces do not enter into the armature force balance and therefore do not have a large effect on the regulation of the device.

These and other objects and advantages of the invention will become more apparent by reference to the following specification and the attached drawings.

### BRIEF DESCRIPTION OF THE DRAWINGS

Figure 1 is a cross sectional elevational view of a two-stage embodiment of the present invention;
Figure 2 is a cross sectional elevational view of an alternate two-stage embodiment of the present invention; and
Figure 3 is a cross sectional elevational view of a second alternative two-stage embodiment of the present invention.
Figure 4 is a qualitative curve illustrating the output pressure/current performance of the Figure 1 embodiment.

### MORE DETAILED DESCRIPTION OF THE DRAWINGS

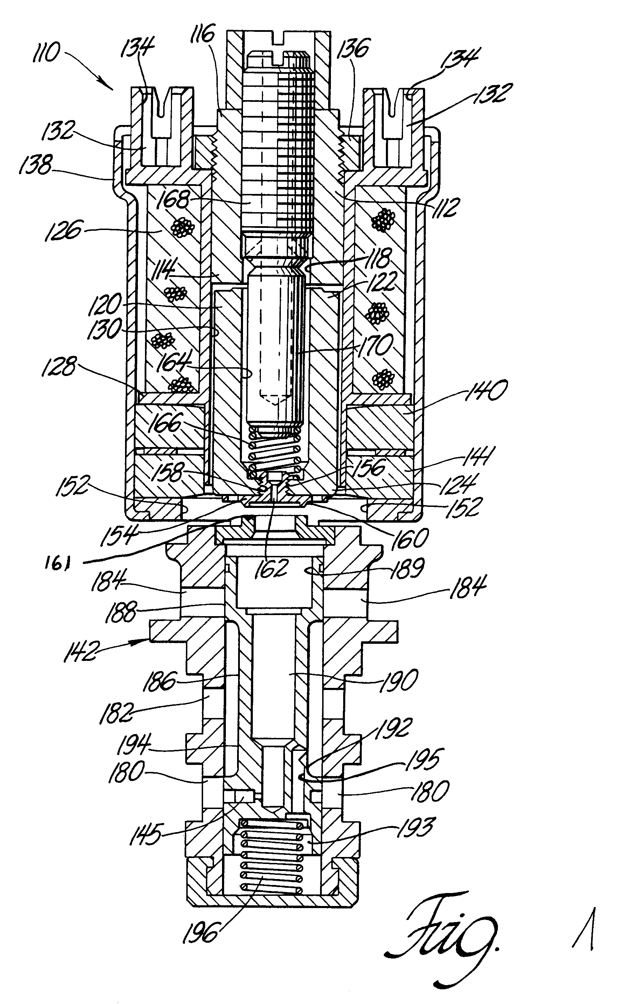

A pressure regulating device for regulating the pressure of a flowing fluid medium is generally shown at 110 in Figure 1. The device 110 includes a stationary generally cylinderical pole piece or member 112 having shape and axially opposed ends 114 and 116. The stationary member 112 also includes a passageway 118 communicating axially therethrough.

The device 110 also includes a movable armature means disposed axially from the stationary member 112 for movement axially in relation to the stationary member 112. The armature means comprises a cylinderical shaped armature 120 having an open end 122 spaced axially from the end 114 of the stationary member 112. This creates a working gap 123 between the armature 120 and the end 114 of the stationary member 112. The working gap 123 defines the distance the armature 120 moves in relation to the stationary member 112. The armature 120 also includes a closed end 124 axially opposite the first end 122.

The device 110 further includes a coil means disposed partially about the stationary member 112 and the armature 120 and through which an electrical current flows from a source (not shown) for generating magnetic flux to create an attractive force to move the armature 120 in relation to the stationary member 112. The coil means comprises a solenoid coil 126. The current flowing through the solenoid coil 126 may be DC or the average value resulting from a chopped or pulse width modulated electrical supply. The attractive force is proportional to the current and the square of the number of turns of wire on the solenoid coil 126 and inversely proportional to the square of the distance between armature 120 and the end 114 of the stationary member 112.

An annular U-shaped bracket member 128 is disposed partially about the stationary member 112 and armature 120, and the solenoid coil 126 is disposed within the bracket member 128, which forms a central passage 130 communicating axially through it. The armature 120 is slideably disposed in the passage 130 while the stationary member 112 is press-fitted into one end of the passage 130. A pair of connectors 132 are disposed in bores 34 formed in the bracket member 128 and connected to the solenoid coil 126 for attachment to an electrical supply source to allow electrical current to flow to the solenoid coil 126.

A return member 136 is threadably engaged and disposed about one end of the stationary member 112 and abuts one end of the bracket member 128. The return member 136 creates a closed flux loop by allowing magnetic flux to flow from the solenoid coil 126 through the bracket member 128 and return member 136 to the stationary member 112 and across the working gap 123 to the armature 120 back to the solenoid coil 126.

The device 110 includes a housing means encasing the armature 120, solenoid coil 126 and stationary member 112. The housing means comprises an annular casing 138 (first housing portion) about the device 110 to prevent undesired or foreign contaminants from entering the device 110, and it also includes a pair of annular seals 140 and 141 at one end of the bracket member 128 to prevent fluid contaminants from contacting the solenoid coil 126.

The device 110 further includes a bleed valve means spaced axially from one end and connected to the armature 120 for moving concurrently with the armature 120. The bleed valve means comprises a valve plate 154 having one end 156 threadably engaging an aperture 158 formed in the closed end 124 of the armature 120. The valve plate 154 has an axially spaced end 160 which operatively cooperates with the valve seat 161 of housing 142.

The valve plate 154 also includes an aperture 162 to allow a small predetermined amount of fluid to enter the cavity 164 of the armature 120.

The device 110 includes a biasing means for continuously biasing the valve plate 154 toward the valve housing 142. The biasing means comprises a spring 166 disposed within the cavity 164 formed in the armature 120 between an adjustment means 168 and the closed end 124 of the armature 120. The adjustment means is disposed axially within the cavity 164 of the armature for controlling the force of the spring 166 on the armature 120 in relation to the face of the valve housing 142, and it comprises a threaded rod 168 threadably engageable with the stationary member 112 and having one end 170 disposed within the cavity 164 of the armature 120.

The device 110 further includes a valve housing, generally indicated at 142, having one or more apertures in the valve housing 142 to allow a fluid medium to enter and exit the valve housing 142 and at the armature 120. Specifically, a first aperture 180 is formed in the valve housing 142 to allow the fluid medium to enter the valve housing 142. A second aperture 182 formed in the valve housing 142 allows the fluid medium to exit the valve housing 142. A third aperture 184 is formed in the valve housing 142 to allow fluid to exit the valve housing 142 and flow back to the sump (not shown).

The device 110 further includes a flow valve means moving independently of the armature 120. The flow valve means is similar to that disclosed in copending application, U.S. Serial Number 07/066,693, entitled "Transmission Pressure Regulator" to Ralph P. McCabe. The flow valve means comprises a spool valve 186 having a first end 188 spaced axially from the closed end 124 of the armature 120. The first end 188 of the spool valve 186 includes a first cavity 189 formed therein. The spool valve 186 also includes a first internal passage 190 communicating with the first aperture 180 of the valve housing 142 and the first cavity 189 of the first end 188 to allow the fluid medium to flow from the first aperture 180 to the first cavity 189. The spool valve 186 also includes a second end 192 axially opposite the first end 188 and having a second cavity 193 formed therein. The spool valve 186 also includes an annular recessed portion 194 about the circumference thereof between the first end 188 and the second end 192 thereof. The spool valve 186 also includes a third internal passage 195 communicating with the annular recessed portion 194 and the second cavity 193 to control or move the spool valve 186 independently of the armature 120. A spring 196 may be disposed in the second cavity 193 to bias the spool valve 186 toward the armature 120 to reduce osciliations of the spool valve 186 due to fluid flow.

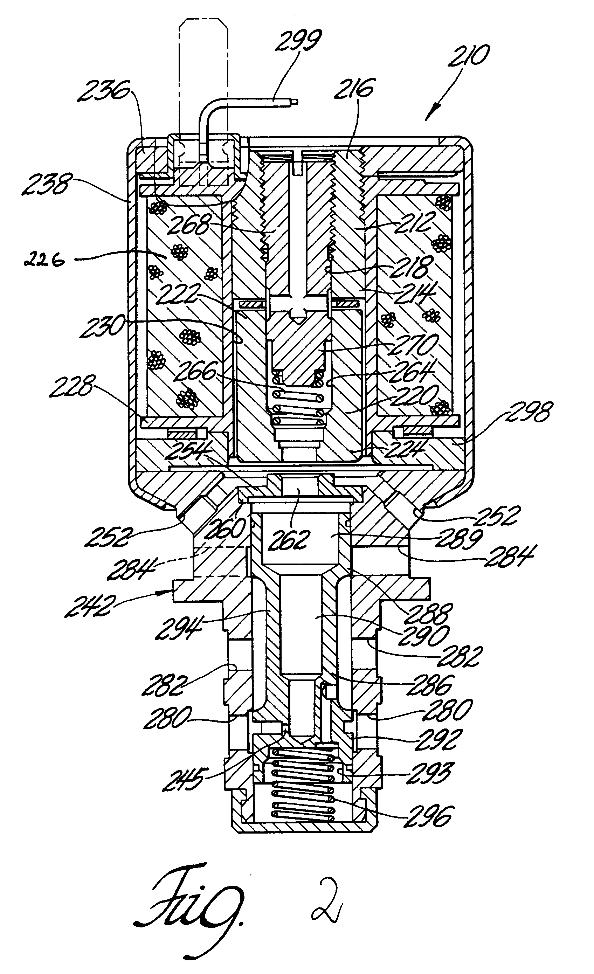

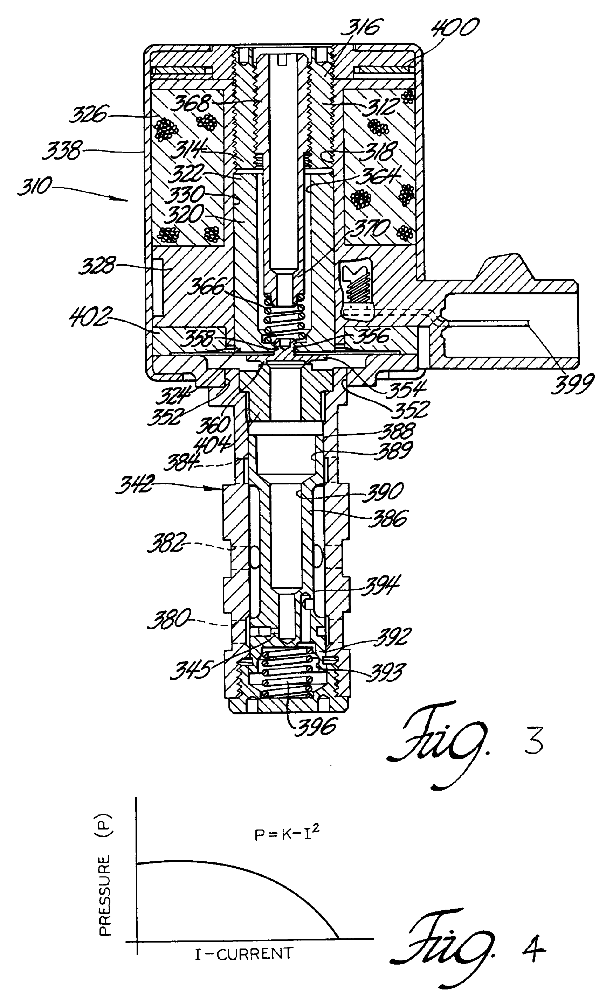

A first alternate two-stage embodiment of the present invention is generally shown at 210 in Figure 2, the parts of Figure 3 that are similar to Figure 2 embodiment having similar reference numbers. The second alternate embodiment 210 is similar in construction to embodiment 110 of Figure 2. The device 210 has the second internal passage 252 extending diagonally outwardly of the valve housing 242 relative to the first internal passage 290. Also, the device 210 includes a flux return washer 298 and eliminates the connectors 32 of the device 110 and substitutes a wire 299 leading from the coil 226. The operation of the device 210 is the same as that of the device 110.

Figure 3 illustrates a second alternate two-stage embodiment 310 of the device 110, like parts of the Figure 1 and Figure 2 first alternate two-stage embodiment again being identified with similar reference numerals. The device 310 includes a pole washer 400 at one end of the bracket member 328 and a flux return washer 402 at the other end of the bracket member 328. The device 310 also includes a valve seat 404 disposed within the valve housing 342 with which the valve plate 354 cooperates. Again, the operation of the device 310 is generally the same as that of the device 110.

The invention has been described in an illustrative manner, and it is to be understood that the terminology which has been used is intended to be in the nature of words of description rather than of limitation.

Obviously, many modifications and variations of the present invention are possible in light of the above teachings.

## Claims

1. A pressure regulating assembly (110) for regulating the pressure of a flowing fluid medium, comprising a first housing portion (138) and a valve housing (142), an electrical field coil (126), carried by said first housing portion (138), a pole piece (112) situated generally within said field coil (126), a valve seat (161), fluid-flow passage formed through said valve seat (161), said pole piece (112) comprising a pole piece annular axial end face portion (114), an armature (120); at least partly situated generally within said field coil (126), said armature (120) comprising an armature annular axial end face portion (122), wherein said armature (120) is axially situated between said pole piece (112) and said valve seat (161) as to thereby cause said armature annular axial end face portion (122) to be juxtaposed to said pole piece annular axial end face portion (114), a spring (166) normally resiliently urging said armature (120) in a direction away from said pole piece (112) and toward said valve seat (161) as to thereby terminate the flow of said fluid medium out of said fluid-flow passage, wherein said valve housing (142) comprises a generally cylindrical inner chamber, a spool valve (186) situated in said cylindrical inner chamber and movable with respect to said cylindrical inner chamber, said spool valve (186) comprising at least first and second diametrically relatively large and generally cylindrical valving portions engaging the surface of said cylindrical inner chamber, said spool valve (186) further comprising a generally axially extending body situated between and operatively interconnecting said first and second cylindrical valving portions, said generally axially extending body being diametrically relatively small as to thereby define an recessed portion (194) circumferentially between said axially extending body and said cylindrical inner chamber wherein said recessed portion (194) is also axially confined between said first and second generally cylindrical valving portions, a first fluid inlet passage (180) formed in said valve housing (142) at a location as to be generally juxtaposed to said first generally cylindrical valving portion for general control by said first valving portion, second fluid outlet passage (182) formed in said valve housing (142) at a location as to communicate with said recessed portion (194) third fluid outlet passage (184) formed in said valve housing (142) at a location as to be generally juxtaposed to said second generally cylindrical valving portion for general control by said second valving portion, fourth fluid passage (190) communicating between said first fluid inlet passage (180) and said fluid-flow passage formed through said valve seat (161), characterized in that there is provided a bleed valve comprising a valve plate (154) and the said valve seat (161) separating the armature (120) from the spool valve (186), that the biasing spring (166) urges the valve plate (154) toward the valve housing (152) and that the armature (120) moves toward the pole piece (112) due to the magnetic flux of the solenoid coil (126) to disengage the bleed valve.

2. A pressure regulating assembly (110) according to claim 1, wherein said armature (120) comprises first and second axial ends, wherein said first axial end comprises said armature annular axial end face portion (114), and further comprising a valving member (154) carried by said second axial end and movable in unison with said armature (120), said valving member (154) when moved by said armature (120) against said valve seat (161) being effective to terminate flow of said fluid medium out of said fluid-flow passage and toward sump.

3. A pressure regulating assembly (110) according to claim 1 and further comprising adjustment means (168) for selectively adjusting said spring (166) as to thereby selectively adjust the resilient pre-load force exerted by said spring (166) on said armature (120) to thereby selectively determine said magnitude of said electrical current necessary to bring about movement of said armature (120) away from said valve seat (161).

4. A pressure regulating assembly (110) according to claim 3, wherein said adjustment means (168) comprises an axially threadably adjustable spring seat operatively engaging said spring (166).

5. A pressure regulating assembly (110) according to claim 1, wherein said fourth fluid passage is formed in said spool valve (186).

6. A pressure regulating assembly (110) according to claim **4** wherein said fourth fluid passage is formed in said spool valve (186).

7. A pressure regulating assembly (110) according to claim **1** and further comprising a second spring (196) operatively connected to said spool valve (186) as to continually resiliently urge said spool valve (186) in the relative direction in which said second cylindrical valving portion (193) is disposed, wherein said cylindrical inner chamber extends . axially beyond said first cylindrical valving portion as to form an end chamber, wherein said second resilient means (196) is at least in part situated in said end chamber, and further comprising fifth fluid passage communicating between said annular chamber and said end chamber.

8. A pressure regulating asssembly (110) according to claim **1** wherein said armature (120) comprises first and second axial ends, wherein said first axial end comprises said armature annular axial end face portion, and further comprising additional fluid passage means extending through said second axial end of said armature and wherein said additional fluid passage is effective for conveying a portion of said fluid medium as flows through said fluid-flow passage to space existing in and about said armature (120).

9. A pressure regulating assembly (110) according to claim **8** wherein said additional fluid passage comprises calibrated fluid flow restriction (162).

10. A pressure regulating assembly (110) according to claim **1** wherein said armature comprises a cup-like configuration having a generally axial end wall and a cylindrical wall extending axially therefrom having an open end and defining an inner space generally radially confine said cylindrical wall, wherein said axial end wall (61) is disposed as to be juxtaposed to said valve seat (61), further comprising an additional fluid passage extending through said axial end wall and communicating with said inner space, said additional fluid passage being effective to convey a portion of said fluid medium as flows through said fluid-flow passage to said inner space and from said inner space to such additional space as exists between said armature (120) and said electrical field coil (126).

11. A pressure regulating assembly according to claim **10** wherein said additional fluid passage comprises calibrated fluid flow restriction.

12. A pressure regulating assembly according to claim **2** and further comprising additional fluid passage extending through said valving member, wherein said additional fluid passage comprises calibrated fluid flow restriction and wherein said additional fluid passage is effective for conveying a portion of said fluid medium as flows through said fluid-flow passage to space existing in and about said armature.

## Patentansprüche

1. Druckregeleinheit (110) zum Regeln des Druckes eines fließfähigen Mediums, mit einem ersten Gehäuseteil (138) und einem Ventilgehäuse (142), einer elektrischen Feldspule (126), die vom ersten Gehäuseteil (138) getragen ist, mit einem Polstück (112), das sich im wesentlichen innerhalb der Feldspule (126) befindet, mit einem Ventilsitz (161), einem dem Ventilsitz (161) angeformten Kanal für strömendes Medium, wobei das Polstück (112) einen axialen Stirnflächenteil (114) aufweist, mit einem Anker (120), der wenigstens teilweise im wesentlichen innerhalb der Feldspule (126) angeordnet ist, einen ringförmigen Stirnflächenteil (122) aufweist und axial zwischen Polstück (112) und Ventilsitz (161) angeordnet ist, so daß der Stirnflächenteil (122) dem Stirnflächenteil (114) des Polstückes gegenüber liegt, mit einer Feder (166), die normalerweise den Anker (120) elastisch in einer Richtung vom Polstück (112) hinweg und gegen den Ventilsitz (161) bewegt, um hierdurch die Strömung des Mediums aus dem Strömungskanal zu unterbinden, wobei das Ventilgehäuse (142) eine im wesentlichen zylindrische Innenkammer aufweist, mit einem Ventilschieber (186), das in der zylindrischen Innenkammer angeordnet und im Bezug hierzu bewegbar ist, mit wenigstens einem ersten und einem zweiten zylindrischen Ventilkörper großen Durchmessers zum Erfassen der Fläche der zylindrischen Innenkammer, wobei der Ventilschieber (186) weiterhin einen im wesentlichen axial sich erstreckenden Körper aufweist, der sich zwischen dem ersten und zweiten zylindrischen Ventilteil befindet und diese operativ miteinander verbindet, wobei der sich im wesentlichen axial erstreckende Körper einen relativ kleinen Durchmesser aufweist, um eine Aussparung (194) zu bilden, die sich in Umfangsrichtung zwischen dem sich axial erstreckenden Körper und der zylindrischen inneren Kammer erstreckt, wobei die Aussparung (194) auch axial vom ersten und zweiten im wesentlichen zylindrischen Ventilteil begrenzt ist, mit einem ersten Medium Einlaßkanal (180) der dem Ventilgehäuse (142) an einer Stelle angeordnet, um dem ersten zylindrischen Ventilteil im wesentlichen gegenüber zu liegen zwecks allgemeiner Kontrolle durch den ersten Ventilteil, wobei ein zweiter Medium-Auslaßkanal (182) dem Ventilgehäuse (142) an einer Stelle angeformt ist, um mit der Aussparung (194) zu kommunizieren,
mit einem dritten Medium-Auslaßkanal (184), der dem Ventilgehäuse (142) an einer Stelle angeformt ist, um dem im wesentlichen zylindrischen Ventilkörper im wesentlichen gegenüber zu liegen, zur allgemeinen Kontrolle durch den zweiten Ventilteil, mit einem vierten Mediumkanal (190) der mit dem ersten Medium-Einlaßkanal (180) und dem Medium-Strömungskanal im Ventilsitz (161) kommuniziert,
dadurch gekennzeichnet, daß ein Entlüftungsventil vorgesehen ist, das eine Ventilplatte (154) hat sowie den Ventilsitz (161) aufweist und den Anker (120) vom Ventilschieber (186) trennt, daß die beaufschlagende Feder (166) die Ventilplatte (154) gegen das Ventilgehäuse (152) drückt, und daß sich der
Anker (120) auf Grund des magnetischen Flußes der Solenoid-Spule (126) zum Polstück (112) hin bewegt, um das Belüftungsventil freizugeben.

2. Druckregeleinheit (110) nach Anspruch 1, dadurch gekennzeichnet, daß der Anker (120) ein erstes und ein zweites axiales Ende aufweist, daß das erste axiale Ende den genannten Stirnflächenteil (114) umfaßt, daß ein Ventilelement (154) vorgesehen ist, das vom zweiten axialen Ende des Ankers (120) getragen ist und sich gemeinsam mit diesem bewegt, und daß das Ventilelement (154) bei Bewegung durch den Anker (120) gegen den Ventilsitz (161) hin die Strömung des schließfähigen Mediums aus dem Strömungskanal und gegen den Sumpf hin beendet.

3. Druckregeleinheit (110) nach Anspruch 1, dadurch gekennzeichnet, daß diese eine Justiervorrichtung (168) zum selektiven justieren der Feder (166) aufweist, um hierdurch selektiv die elastische Vorspannung zu justieren, die von der Feder (166) auf den Anker (120) ausgeübt wird, um damit selektiv die Größe des elektrischen Stromes zu bestimmen, der notwendig ist, um eine Bewegung des Ankers (120) in Richtung vom Ventilsitz (161) hinweg herbei zu führen.

4. Druckregeleinheit (110) nach Anspruch 3, dadurch gekennzeichnet, daß die Justiervorrichtung (168) einen axial verschraubbaren, justierbaren Federsitz aufweist, der mit der Feder (166) in Wirkverbindung bringbar ist.

5. Druckregeleinheit (110) nach Anspruch 1, dadurch gekennzeichnet, daß der vierte Mediumkanal dem Ventilschieber (186) angeformt ist.

6. Druckregeleinheit (110) nach Anspruch 4, dadurch gekennzeichnet, daß der vierte Strömungskanal dem Ventilschieber (186) angeformt ist.

7. Druckregeleinheit (110) nach Anspruch 1, dadurch gekennzeichnet, daß diese eine zweite Feder (196) aufweist, die mit dem Ventilschieber (186) in Wirkverbindung steht, um den Ventilschieber (186) kontinuierlich elastisch in die jeweilige Richtung zu drücken, in welcher sich der zweite zylindrische Ventilteil (193) befindet, daß sich die zylindrische innere Kammer axial zwischen dem ersten Ventilteil befindet, um eine Endkammer zu bilden, und daß sich die zweite Feder wenigstens teilweise in der Endkammer befindet und daß weiterhin ein fünfter Mediumkanal vorgesehen ist, der die Ringkammer und die Endkammer miteinander verbindet.

8. Druckregeleinheit (110) nach Anspruch 1, dadurch gekennzeichnet, daß der Anker (120) ein erstes und ein zweites axiales Ende aufweist, daß das erste axiale Ende den genannten Stirnflächenteil des Ankers aufweist, daß ein zusätzlicher Mediumkanal vorgesehen ist, der sich durch das zweite axiale Ende des Ankers hindurch erstreckt, und daß der zusätzliche Mediumkanal einen Teil des fließfähigen Mediums, der durch den Mediumkanal strömt, dem in und um den Anker (120) herum befindlichen Raum zuführt.

9. Druckregeleinheit (110) nach Anspruch 8, dadurch gekennzeichnet, daß der zusätzliche Strömungkanal eine kalibrierte Drossel (162) umfaßt.

10. Druckregeleinheit (110) nach Anspruch 1, dadurch gekennzeichnet, daß er Anker eine becherförmige Gestalt aufweist, mit einer im wesentlichen axialen Stirnwand und einer zylindrischen Wand, die sich axial von dieser aus erstreckt und ein offenes Ende aufweist, so daß ein Innenraum gebildet ist, der radial im wesentlichen durch die zylindrische Wand begrenzt ist, daß die axiale Stirnwand (61) derart angeordnet ist, daß sie dem Ventilsitz (61) gegenüber liegt, und daß weiterhin ein zusätzlicher Strömungskanal vorgesehen ist, der sich durch die axiale Stirnwand hindurch erstreckt und mit dem Innenraum kommuniziert, daß der zusätzliche Strömungskanal einen Teil des fließfähigen Mediums, das durch den Strömungskanal hindurch tritt, dem Innenraum zuführt sowie von dem Innenraum zu einem solchen zusätzlichen Raum, der sich zwischen dem Anker (120) und der elektrischen Feldspule (126) befindet.

11. Druckregeleinheit nach Anspruch 10, dadurch gekennzeichnet, daß der zusätzliche Stömungskanal eine kalibrierte Strömungsdrossel aufweist.

12. Druckregeleinheit nach Anspruch 2, dadurch gekennzeichnet, daß ein zusätzlicher Strömungskanal vorgesehen, der sich durch das Ventilelement hindurch erstreckt, und eine kalibrierte Drossel aufweist, und daß der zusätzliche Strömungskanal einen Teil des fließfähigen Mediums, das durch den Strömungskanal strömt, einem Raum zuführt, der sich in und um den Anker herum befindet.

## Revendications

1. Régulateur de pression (110) pour réguler la pression d'un agent fluide en circulation, comprenant une première partie de carter (138) et un carter de soupape (142), une bobine de champ électrique (126) portée par la première partie de carter (138), une pièce polaire (112) située d'une façon générale à l'intérieur de la bobine de champ (126), un siège de soupape (161), un passage d'écoulement de fluide formé à travers le siège de soupape (161), la pièce polaire (112) comprenant une partie de face d'extrémité axiale annulaire de pièce polaire (114), une armature (120), située d'une façon générale au moins partiellement dans la bobine de champ (126), cette armature (120) comprenant une partie de face d'extrémité axiale annulaire d'armature (122), caractérisé en ce que l'armature (120) est située axialement entre la pièce polaire (112) et le siège de soupape (161) de manière à amener la partie de face d'extrémité axiale annulaire d'armature (122) à être juxtaposée à la partie de face d'extrémité axiale annulaire de pièce polaire (114), un ressort (166) poussant normalement élastiquement l'armature (120) dans une direction l'écartant de la pièce polaire (112) et la rapprochant du siège de soupape (161) pour couper ainsi l'écoulement de l'agent fluide sortant du passage d'écoulement de fluide, en ce que le carter de soupape (142) comprend une chambre intérieure généralement cylindrique, une soupape à tambour (186) située dans la chambre intérieure cylindrique et pouvant se déplacer par rapport à celle-ci, la soupape à tambour (186) comprenant au moins une première et une seconde partie de soupapes relativement grandes diamétralement et généralement cylindriques, s'engageant contre la surface de la chambre intérieure cylindrique, la soupape à tambour (186) comprenant en outre un corps s'étendant généralement axialement entre la première et la seconde partie de soupapes cylindriques en les reliant opérationnellement, le corps s'étendant généralement axialement étant relativement petit dans le sens diamétral pour définir ainsi une partie en creux (194) s'étendant circonférentiellement entre le corps axial et la chambre intérieure cylindrique, de façon que la partie en creux (194) soit également limitée axialement entre la première et la seconde partie de soupapes généralement cylindriques, un premier passage d'entrée de fluide (180) formé dans le carter de soupape (142) en un point lui permettant d'être généralement juxtaposé à la première partie de soupape généralement cylindrique pour être commandé d'une façon générale par la première partie de soupape, un second passage de sortie de fluide (182) formé dans le carter de soupape (142) en un point lui permettant de communiquer avec la partie en creux (194), un troisième passage de sortie de fluide (184) formé dans le carter de soupape (142) en un point lui permettant d'être généralement juxtaposé à la seconde partie de soupape généralement cylindrique pour être commandé d'une façon générale par la seconde partie de soupape, un quatrième passage de fluide (190) assurant la communication entre le premier passage d'entrée de fluide (180) et le passage d'écoulement de fluide formé à travers le siège de soupape (161), régulateur de pression caractérisé en ce qu'il utilise une soupape de soutirage comprenant une plaque de soupape (154) et le siège de soupape (161) séparant l'armature (120) de la soupape à tambour (186), en ce que le ressort de poussée (166) pousse la plaque de soupape (154) vers le carter de soupape (152), et en ce que l'armature (120) se déplace vers la pièce polaire (112) du fait du flux magnétique de la bobine de solénoïde (126) pour dégager la soupape de soutirage.

2. Régulateur de pression (110) selon la revendication 1, caractérisé en ce que l'armature (120) comprend une première et une seconde extrémité axiale, la première extrémité axiale comprenant la partie de face d'extrémité axiale annulaire d'armature (114), et comprend en outre un élément de soupape (154) porté par la seconde extrémité axiale et pouvant se déplacer en synchronisme avec l'armature (120), l'élément de soupape (154), lorsqu'il est déplacé par l'armature (120) contre le siège de soupape (161), servant à couper l'écoulement de l'agent fluide sortant du passage d'écoulement de fluide et allant vers un réservoir.

3. Régulateur de pression (110) selon la revendication 1, caractérisé en ce qu'il comprend en outre un moyen de réglage (168) pour régler sélectivement le ressort (166) afin de régler ainsi sélectivement la force de précharge élastique exercée par le ressort (166) sur l'armature (120), de manière à déterminer ainsi sélectivement l'amplitude du courant électrique qui est nécessaire pour déclencher le mouvement de l'armature (120) afin qu'elle s'écarte du siège de soupape (161).

4. Régulateur de pression (110) selon la revendication 3, caractérisé en ce que le moyen de réglage (168) comprend un siège de ressort ajustable par vissage axial et s'engageant opérationnellement contre le ressort (166).

5. Régulateur de pression (110) selon la revendication 1, caractérisé en ce que le quatrième passage de fluide est formé dans la soupape à tambour (186).

6. Régulateur de pression (110) selon la revendication 4, caractérisé en ce que le quatrième passage de fluide est formé dans la soupape à tambour (186).

7. Régulateur de pression (110) selon la revendication 1, caractérisé en ce qu'il comprend en outre un second ressort (196) relié en fonctionnement à la soupape à tambour (186) pour pousser élastiquement de façon continue cette soupape à tambour (186) dans la direction relative dans laquelle est disposée la seconde partie de soupape cylindrique (193), de façon que la chambre intérieure cylindrique s'étende axialement au-delà de la première partie de soupape cylindrique pour former ainsi une chambre d'extrémité dans laquelle se situe au moins en partie le second ressort (196), et en ce qu'il comprend en outre un cinquième passage de fluide assurant la communication entre la chambre annulaire et la chambre d'extrémité.

8. Régulateur de pression (110) selon la revendication 1, caractérisé en ce l'armature (120) comprend une première et une seconde extrémité axiale, la première extrémité axiale comprenant la partie de face d'extrémité axiale annulaire d'armature, et comprend en outre un moyen de passage de fluide supplémentaire s'étendant à travers la seconde extrémité axiale de l'armature, ce passage de fluide supplémentaire servant à transporter une partie de l'agent fluide lorsqu'il s'écoule à travers le passage d'écoulement de fluide vers l'espace situé dans et autour de l'armature (120).

9. Régulateur de pression (110) selon la revendication 8, caractérisé en ce que le passage de fluide supplémentaire comprend une réduction de débit de fluide calibrée (162).

10. Régulateur de pression (110) selon la revendication 1, caractérisé en ce que l'armature présente une configuration en forme de coupelle comportant une paroi d'extrémité généralement axiale, en ce qu'une paroi cylindrique partant axialement de celle-ci comporte une extrémité ouverte et définit un espace intérieur limité généralement radialement par la paroi cylindrique, en ce que la paroi d'extrémité axiale est disposée de manière à être juxtaposée au siège de soupape (161) et comprend en outre un passage de fluide supplémentaire passant à travers la paroi d'extrémité axiale et communiquant avec l'espace intérieur, le passage de fluide supplémentaire servant à transporter une partie de l'agent fluide lorsqu'il s'écoule à travers le passage d'écoulement de fluide vers l'espace intérieur, et à partir de l'espace intérieur vers l'espace supplémentaire lorsqu'il existe entre l'armature (120) et la bobine de champ électrique (126).

11. Régulateur de pression selon la revendication 10, caractérisé en ce que le passage de fluide supplémentaire comprend une réduction de débit de fluide calibrée.

12. Régulateur de pression selon la revendication 2, caractérisé en ce qu'il comprend en outre un passage de fluide supplémentaire s'étendant à travers l'élément de soupape, en ce que le passage de fluide supplémentaire comprend une réduction de débit de fluide calibrée, et en ce que le passage de fluide supplémentaire sert à transporter une partie de l'agent fluide lorsqu'il s'écoule à travers le passage d'écoulement de fluide vers l'espace existant à l'intérieur et autour de l'armature.
